# EUROPEAN PATENT APPLICATION

(11) **EP 1 594 313 A2**
(43) Date of publication of application: **09.11.2005**
(21) Application number: 05252510.2
(22) Date of filing: 21.04.2005
(51) Int. Cl.: H04N 5/44

(54) **Apparatus and method for processing time information**

(30) Priority: 26.04.2004 KR 2004028662
(71) Applicant: SAMSUNG ELECTRONICS CO., LTD., Suwon-si, Gyeonggi-do (KR)
(72) Inventor: Kim, Jong-phil, Yeongtong-gu, Suwon-si, Gyeonggi-do (KR)
(74) Representative: Brandon, Paul Laurence

(57) **Abstract**

Provided are an apparatus for processing time information and a method of the same for automatically establishing a present time according to a country/region in a broadcast signal receiving device using time difference data obtained independently of received broadcasting signals. The apparatus includes a demodulation unit (120) demodulating standard time data included in broadcasting signals, a first memory unit (130) storing a time table, which includes time difference data of each country/region, and a control unit (140) establishing a present time of a corresponding country/region by using the demodulated standard time data and the time difference data extracted from the time table. Time difference data is alternatively received via a transmission medium.

## Description

The present invention relates to an apparatus for processing time information and a method of the same, and more particularly, to an apparatus for processing time information and a method of the same for automatically establishing a present time according to a country/region.

In general, a broadcasting receiving device, such as a set top box, demodulates broadcasting signals, which are received through a tuner, to obtain image signals and voice signals and transmits the image signals and the voice signals to a predetermined display apparatus for a user to view broadcasting programs.

Such a broadcasting receiving device obtains a present time and displays the present time through the display apparatus when needed.

Thus, the user may perform various reservation functions by using the present time.

When the broadcasting receiving device obtains the present time and displays the present time through the display apparatus, the present time of a country/region is displayed.

Accordingly, when using the broadcasting receiving apparatus in another country/region, the present time should be re-established based on the country/region.

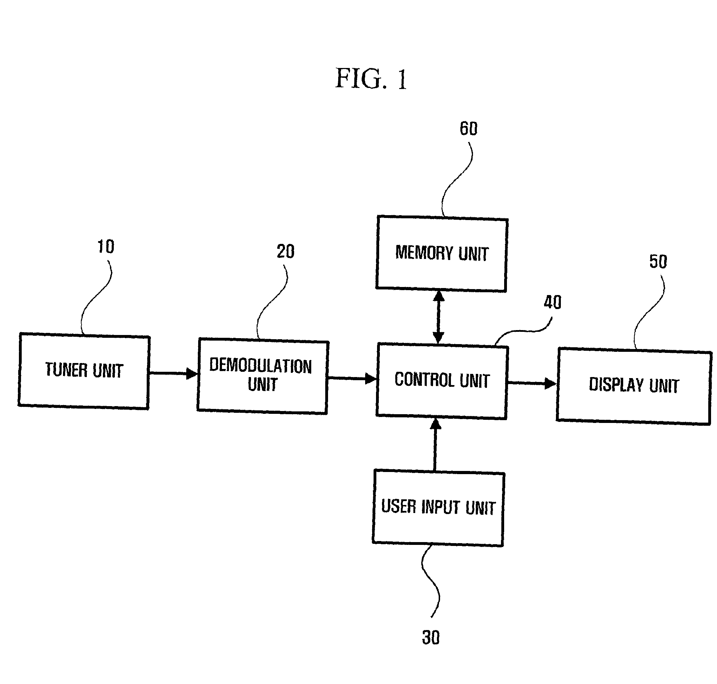

FIG. 1 is a block diagram of a conventional apparatus for processing time information. Referring to FIG. 1, a conventional apparatus for processing time information includes a tuner unit 10 for receiving broadcasting signals, a demodulation unit 20 for demodulating standard time data included in the broadcasting signals, a user input unit 30 to which time difference data is input, and a control unit 40 for establishing a present time for a corresponding country/region by using the input time difference data and the demodulated standard time data.

In addition, the conventional apparatus for processing time information further includes a display unit 50 for displaying the demodulated standard time data and a memory unit 60 for storing the demodulated standard time data.

Accordingly, the user views the standard time data, which is displayed through the display unit 50, and inputs the time difference data.

The time difference data may be stored in the memory unit 60 along with the standard time data or may be stored in an additional memory.

The control unit 40 establishes the present time by using the time difference data input by the user and the standard time data, and displays the established present time through the display unit 50.

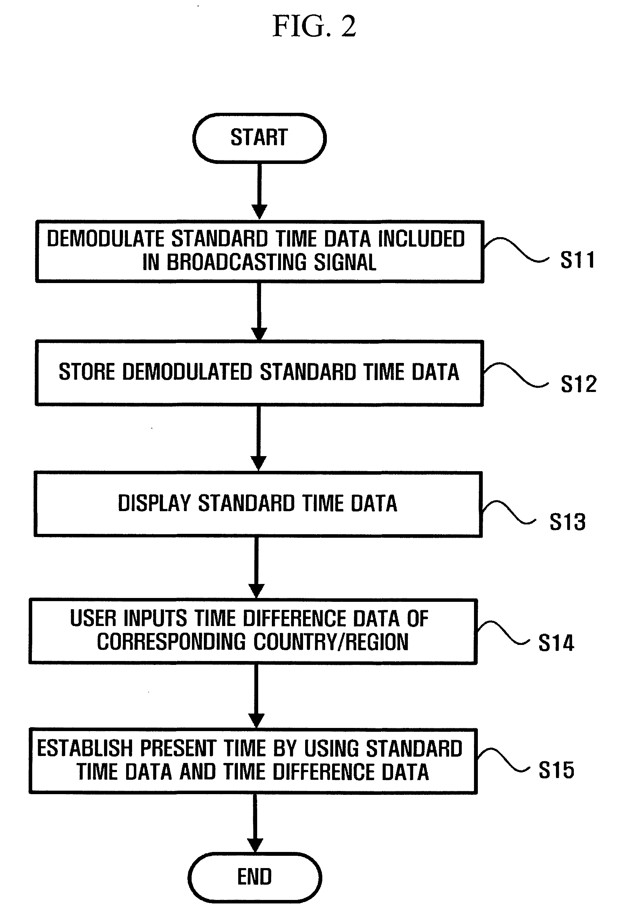

An operation of a conventional apparatus for processing time information will now be described with reference to FIG. 2.

Referring to FIG. 2, the standard time data included in broadcasting signals, which are received by the tuner unit 10, is demodulated by the demodulation unit 20, in operation S11.

The demodulated standard time data is stored in the memory unit 60, in operation S12.

The control unit 40 displays the stored standard time data through the display unit 50, in operation S 13.

A user views the displayed standard time data and inputs the time difference data of a corresponding country/region to the user input unit 30, in operation S14.

The control unit 40 establishes a present time by using the input time difference data and the standard time data, in operation S 15.

The control unit 40 displays the established present time through the display unit 50 to allow the user to check the present time.

However, such a conventional apparatus for processing time information and a method of the same require a user to know the time difference data in order to establish the present time in a country/region. Accordingly, it is inconvenient to use the conventional apparatus for processing time information.

In addition, it is annoying having to reestablish the present time whenever the country/region is changed.

Korean Laid-open Patent No. 1999-0060488 discloses a method of processing time information for displaying the present time/date on an image. In the method of processing time information disclosed therein, a time data table is received from satellite broadcasting data after receiving and decoding the satellite broadcasting data, and the standard time/date data is decoded and stored. Thereafter, a time difference value between countries/regions and/or a time difference value introduced at a selected point in the calendar year (e.g., in summer time or Daylight Saving Time) is obtained from the received time data table and added to the standard time, and the present time/date is displayed on the image. In this case, the present time/date can be displayed after receiving the satellite broadcasting data, but it is difficult to display the present time/date when the satellite broadcasting data has not been received.

It is an aim of preferred embodiments of present invention to provide an apparatus for processing time information and a method of the same for automatically establishing a present time according to country/region.

According to the present invention there is provided an apparatus and method as set forth in the appended claims. Preferred features of the invention will be apparent from the dependent claims, and the description which follows.

According to an aspect of the present invention, there is provided an apparatus for processing time information, comprising a demodulation unit demodulating the standard time data included in broadcasting signals, a first memory unit storing a time table including the time difference data for countries/regions, and a control unit establishing a present time for a corresponding country/region by using the demodulated standard time data and the time difference data extracted from the time table.

The control unit may extract the time difference data from the time table by using a preliminarily set country/region code value.

The apparatus may further include a second memory unit for storing the extracted time difference data.

The control unit may establish a present time by using the time difference data stored in the second memory unit and the demodulated standard time data and may display the established present time through a display unit.

According to another aspect of the present invention, there is provided an apparatus for processing time information, the apparatus including a demodulation unit demodulating standard time data included in broadcasting signals, a present time data receiving unit receiving present time data of a corresponding country/region through a predetermined transmission medium, and a control unit calculating time difference data of the corresponding country/region by using the demodulated standard time data and the received present time data and displaying the present time by using the demodulated standard time data and the calculated time difference data.

The transmission medium may comprise a power cable.

The apparatus may further include a third memory unit storing the calculated time difference data.

The control unit may establish a present time by using the time difference data stored in the third memory unit and the demodulated standard time data.

According to still another aspect of the present invention, there is provided a method of processing time information, the method including demodulating standard time data included in broadcasting signals, extracting time difference data of a corresponding country/region from a time table, which includes the time difference data of each country/region, and establishing a present time of the corresponding country/region by using the extracted time difference data and the demodulated standard time data. The time table can be obtained independently of the broadcasting signals.

The method may further include storing the extracted time difference data.

In addition, the method may further include displaying the established present time.

According to a further aspect of the present invention, there is provided a method of processing time information, the method including demodulating standard time data included in broadcasting signals, receiving present time data of a corresponding country/region through a predetermined transmission medium, and calculating time difference data of the corresponding country/region by using the received present time data and the demodulated standard time data and displaying a present time by using the demodulated standard time data and the calculated time difference data.

Here, the transmission medium may comprise a power cable.

The method may further include storing the calculated time difference data.

For a better understanding of the invention, and to show how embodiments of the same may be carried into effect, reference will now be made, by way of example, to the accompanying diagrammatic drawings in which:
FIG. 1 is a block diagram of a conventional apparatus for processing time information;
FIG. 2 is a flowchart illustrating a conventional method of processing time information;
FIG. 3 is a block diagram of an apparatus for processing time information by using a time table according to a first embodiment of the present invention;
FIG. 4 is a block diagram of an apparatus for processing time information by using present time data of a country/region according to a second embodiment of the present invention;
FIG. 5 is a flowchart illustrating a method of processing time information by using a time table according to the first embodiment of the present invention;
FIG. 6 illustrates a time table according to the first embodiment of the present invention; and
FIG. 7 is a flowchart illustrating a method of processing time information by using present time data of a country/region according to the second embodiment of the present invention.

The present invention will now be described more fully with reference to the accompanying drawings, in which exemplary embodiments of the invention are shown.

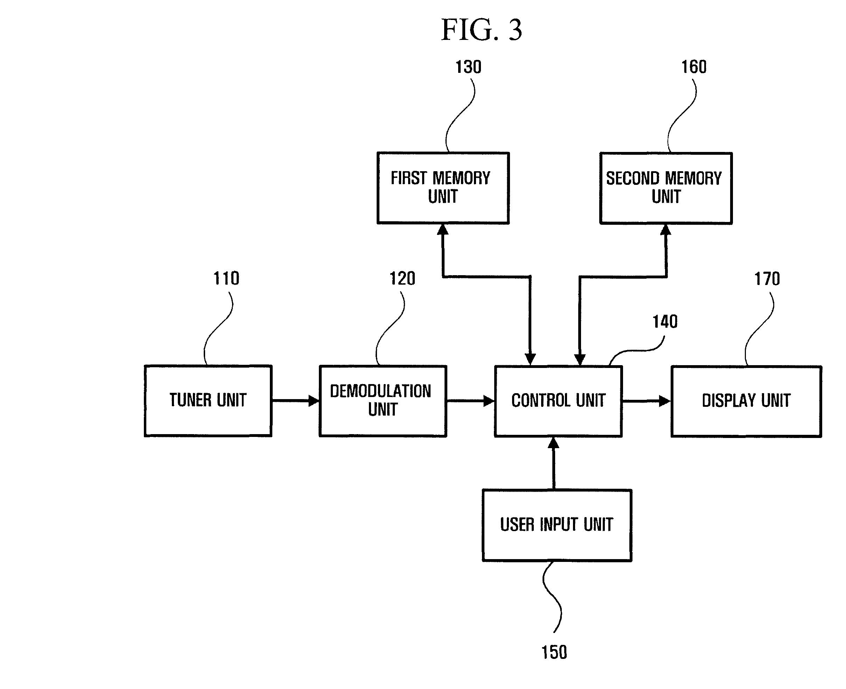

FIG. 3 is a block diagram of an apparatus for processing time information according to a first embodiment of the present invention.

Referring to FIG. 3, an apparatus for processing time information according to the first embodiment of the present invention includes a tuner unit 110 for receiving broadcasting signals, a demodulation unit 120 for demodulating standard time data included in the broadcasting signals, a first memory unit 130 for storing a time table comprising time difference data for countries/regions, and a control unit 140 for establishing a present time of a corresponding country/region by using the demodulated standard time data and the time difference data. The first memory unit 130 can be provided with time difference data of several countries/regions having respective values, from which the time difference data of a selected country/region is retrieved in response to entry of a corresponding value (e.g., by a user via input unit 150 or retrieval of a pre-stored value from a memory via control unit 140). The time difference data for a selected one or for a table of countries/regions is preferably pre-stored in the memory unit 130 and obtained from a source other than the received broadcasting signals (e.g., previously obtained by being pre-loaded with the time table of countries/regions prior to assembly of the apparatus in Fig. 3, or after assembly by uploading via the control unit, or directly via transmission medium coupled thereto such as a telecommunications line, or power table, or wireless communication).

In addition, the apparatus for processing time information further includes a user input unit 150 to which a value selected by the user is input, a second memory unit 160 for storing the time difference data of the country/region corresponding to the selected value of the user, and a display unit 170 for displaying the present time established by the control unit 140.

In this case, the control unit 140 determines the corresponding country/region according to the selected value and extracts a time difference value for the corresponding country/region from the time table to store in the second memory unit 160.

When a predetermined code value for the corresponding country/region is preliminarily set in the apparatus, the control unit 140 extracts the time difference data for the corresponding country/region from the time table by using the code value.

In this case, the first memory unit 130 and the second memory unit 160 may be formed of one chip or separate chips.

In addition, the first memory unit 130 and the second memory unit 160 may include devices such as cache, ROM, PROM, EPROM, EEPROM, flash, SRAM, and DRAM.

The standard time data may be included in a time data table in a packet identifier (PID) of a transport stream packet.

Accordingly, the demodulation unit 120 may obtain the standard time data by demodulating the data included in the time data table in a received packet PID.

Greenwich Mean Time is generally used as the standard time data; however, another standard time may be used as the standard time data.

The control unit 140 establishes the present time of the corresponding country/region by using the demodulated standard time data and the time difference data stored in the second memory unit 160.

In addition, when the control unit 140 completes the extraction of the time difference data of the corresponding country/region, the control unit 140 establishes the present time by using the time difference data stored in the second memory unit 160 without an additional extraction process of the time difference data depending on country/region.

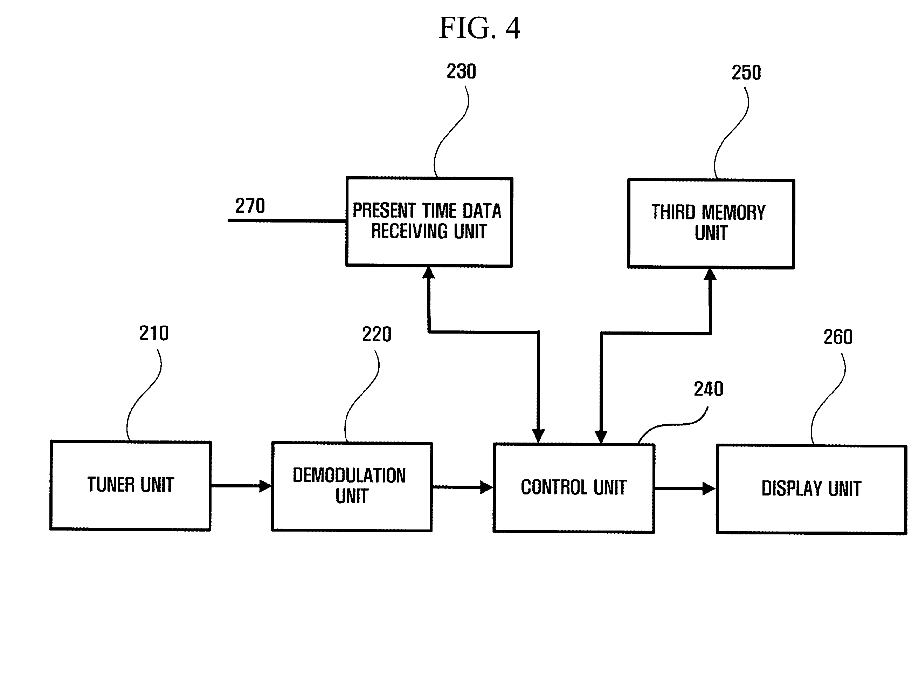

FIG. 4 is an apparatus for processing time information according to a second embodiment of the present invention.

Referring to FIG. 4, an apparatus for processing time information according to the second embodiment of the present invention includes a tuner unit 210 for receiving broadcasting signals, a demodulation unit 220 for demodulating the standard time data included in the broadcasting signals, a present time data receiving unit 230 for receiving the present time data of the corresponding country/region through a predetermined transmission device 270, and a control unit 240 for calculating the time difference data of the corresponding country/region by using the received present time data and the demodulated standard time data and establishing the present time by using the calculated time difference data and the demodulated standard time data.

In addition, the apparatus further includes a third memory unit 250 for storing the calculated time difference data and a display unit 260 for displaying the present time established by the control unit 240.

In this case, the third memory unit 250 may include devices such as cache, ROM, PROM, EPROM, EEPROM, flash, SRAM, and DRAM, as described in the first embodiment of the present invention.

In the illustrative embodiment of the present invention, a transmission medium 270 for receiving the present time data of a predetermined country/region is a power cable.

In this case, the standard time data may be included in the time data table in the PID of the transport stream packet.

Accordingly, the demodulation unit 220 may obtain the standard time data by demodulating the data included in the time data table in a received packet PID.

Greenwich Mean Time is generally used as the standard time data; however, another standard time may be used as the standard time data.

The control unit 240 stores the calculated time difference data in the third memory unit 250 and establishes the present time by using the demodulated standard time data and the time difference data stored in the third memory unit 250.

In addition, when the time difference data of the corresponding country/region is calculated, the control unit 240 establishes the present time by using the time difference data stored in the third memory 250 and the standard time data demodulated by the demodulation unit 220.

An operation of such an apparatus for processing time information according to the embodiments of the present invention will now be described.

Examples of a method of processing time information according to the present invention include a method of establishing a present time by using a time table and a method of establishing a present time by receiving the present time data.

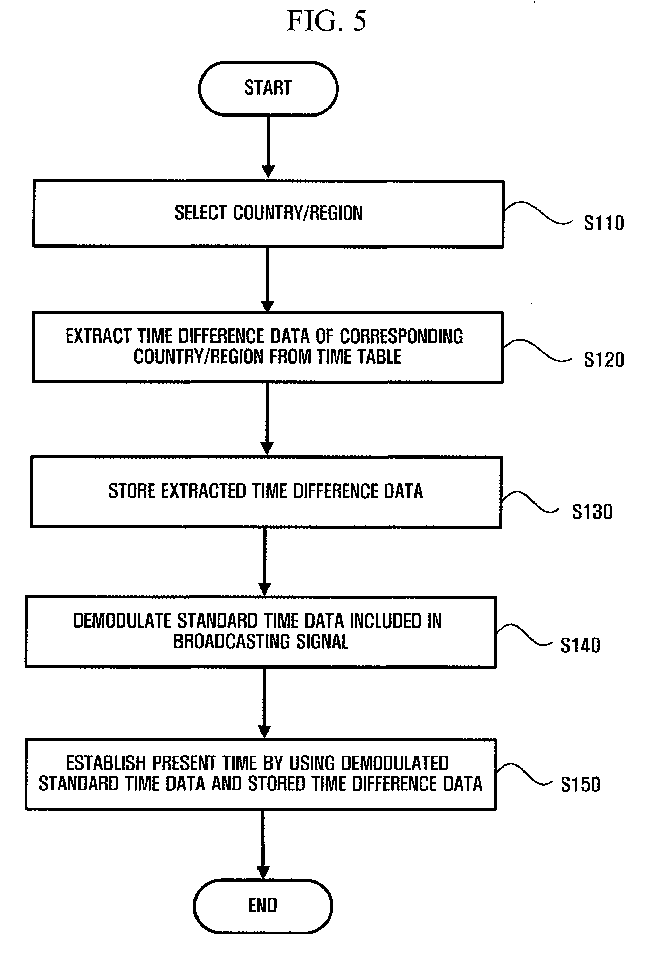

A method of establishing a present time by using the time difference data included in the time table is shown in FIG. 5.

Referring to FIG. 5, a user selects a corresponding country/region through the user input unit 150, in operation S 110.

Then, the control unit 140 determines the selected country/region and extracts corresponding time difference data from the time table, which is stored in the first memory unit 130, in operation S120.

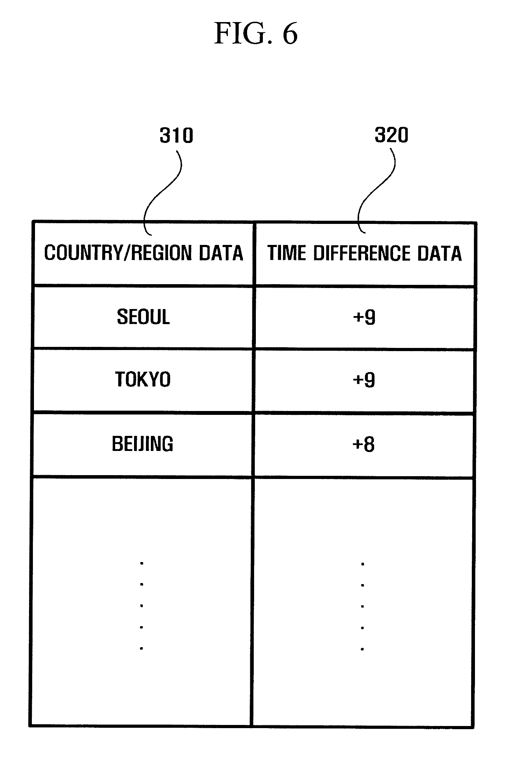

If a device is set for the corresponding country/region, the control unit 140 may determine the country/region by using a set value other than the selection of the user. In this case, the time table includes country/region data 310 for each country/region and time difference data 320 of the corresponding country/region, as shown in FIG. 6.

Accordingly, the control unit 140 may extract the time difference data according to the determined country/region from the time table.

In addition, the control unit 140 stores the extracted time difference data in the second memory unit 160, in operation S 130.

Thereafter, when the tuner unit 110 receives broadcasting signals, the demodulation unit 120 demodulates the standard time data, which is included in the received broadcasting signals, in operation S140.

The control unit 140 establishes a present time by using the demodulated standard time data and the time difference data stored in the second memory unit 160, in operation S150.

The control unit 140 displays the established present time through the display unit 170 to allow the user to check the present time.

In addition, when the control unit 140 completes the extraction of the time difference data of the corresponding country/region, the control unit 140 may establish the present time by using the time difference data stored in the second memory unit 160 without performing the extraction of the time difference data of the corresponding country/regions, in other words, without performing operations S 110 and S120.

In this case, the operation of establishing the present time, in other words, the operation corresponding to operation S150 may be repeatedly performed when demodulating the broadcasting signals.

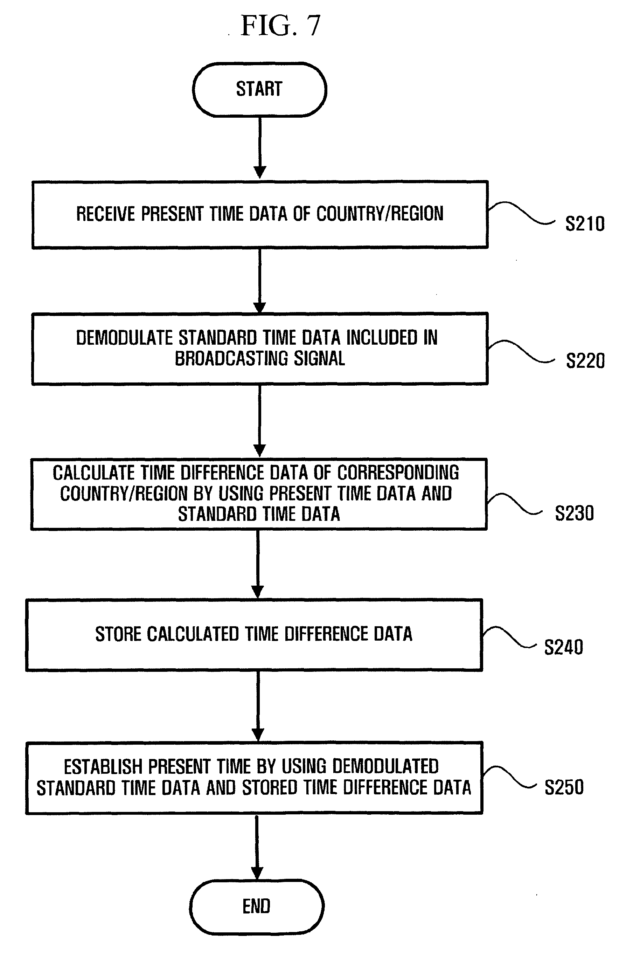

A method of establishing a present time by using the present time data of a corresponding country/region, which is received through a predetermined transmission medium, according to the second embodiment of the present invention is shown in FIG. 7.

Referring to FIG. 7, the present time data of a predetermined country/region is received through the present time data receiving unit 230, in operation S210.

In the description of the present invention, the transmission medium 270 for receiving the present time data of the country/region is a power cable; however, other wireline or wireless transmission media can be used

Thereafter, when broadcasting signals are received through the tuner unit 210, the demodulation unit 220 demodulates the standard time data included in the received broadcasting signals, in operation S220.

The control unit 240 calculates the time difference data of the corresponding country/region by finding the difference between the standard time data demodulated by the demodulation unit 220 and the present time data received by the present time data receiving unit 230, in operation S230.

In addition, the control unit 240 stores the calculated time difference data in the third memory unit 250, in operation S240.

The control unit 240 establishes a present time by using the demodulated standard time data and the time difference data stored in the third memory unit 250, in operation S250.

The control unit 240 may display the established present time through the display unit 260 to allow the user to check the established present time.

In addition, when the calculation of the time difference of the corresponding country/region is completed, the control unit 240 establishes the present time by using the time difference data stored in the third memory unit 250, without performing processes to extract the time difference data of the corresponding country/region, in other words, without performing operations S210, S220, and S230.

In this case, the process of establishing the present time, in other words, the process corresponding to operation S250, may be repeatedly performed when demodulating the broadcasting signals.

In addition, when a change in the time information, such as a change that is introduced in the summer time or in compliance with Daylight Saving Time, is required after the present time is established by using the standard time data and the time difference data, the control unit conveniently establishes the present time by adding or subtracting one hour from the established present time based on the input value of the user.

Therefore, preferred embodiments of the present invention enable, a present time of each country/region to be automatically established by using the standard time data and the time difference data, so it is not necessary for the user to establish the present time, thus preventing inconvenience to the user.

While the present invention has been particularly shown and described with reference to exemplary embodiments thereof, it will be understood by those skilled in the art that various changes in form and detail may be made therein without departing from the scope of the present invention as defined by the following claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An apparatus for processing time information, the apparatus comprising:
a demodulation unit (120) demodulating standard time data included in broadcasting signals;
a first memory unit (130) storing a time table, which comprises time difference data of each of a plurality of countries/regions; and
a control unit (140) establishing a present time of a selected corresponding country/region by using the demodulated standard time data and the time difference data extracted from the time table.

2. The apparatus of claim 1, wherein the control unit (140) extracts the time difference data from the time table by using a preliminarily set country/region code value.

3. The apparatus of claim 1 or 2, further comprising a second memory unit (160) storing the extracted time difference data.

4. The apparatus of claim 3, wherein the control unit establishes a present time by using the time difference data stored in the second memory unit (160) and the demodulated standard time data and displays the established present time through a display unit (170).

5. , The apparatus of claim 1, 2, 3 or 4 wherein the time difference data is provided to said first memory unit (130) independently of said broadcasting signals.

6. An apparatus for processing time information, the apparatus comprising:
a demodulation (220) unit demodulating standard time data included in broadcasting signals;
a present time data receiving unit (230) receiving present time data of a corresponding country/region through a predetermined transmission medium (270); and
a control unit (240) calculating time difference data of a selected corresponding country/region by using the demodulated standard time data and the received present time data and displaying the present time by using the demodulated standard time data and the calculated time difference data.

7. The apparatus of claim 6, wherein the transmission medium (270) comprises a power cable.

8. The apparatus of claim 6 or 7, further comprising a memory unit (250) storing the calculated time difference data.

9. The apparatus of claim 6, 7, or 8, wherein the control unit (240) establishes a present time by using the time difference data stored in the memory unit (250) and the demodulated standard time data.

10. A method of processing time information, the method comprising:
demodulating standard time data included in broadcasting signals;
extracting time difference data of a selected corresponding country/region from a time table, which comprises the time difference data of each of a plurality of countries/regions; and
establishing a present time of the corresponding country/region by using the extracted time difference data and the demodulated standard time data.

11. The method of claim 10, further comprising storing the extracted time difference data.

12. The method of claim 10 or 11, further comprising displaying the established present time.

13. The method of claim 10, 11 or 12, further comprising obtaining the time difference data independently of said broadcasting signals.

14. The method of any one of claims 10 - 14, further comprising repeating said establishing step a selected number of times without first performing said extracting step.

15. A method of processing time information, the method comprising:
demodulating standard time data included in broadcasting signals;
receiving present time data of a selected corresponding country/region through a predetermined transmission medium; and
calculating time difference data of the corresponding country/region by using the received present time data and the demodulated standard time data and displaying a present time by using the demodulated standard time data and the calculated time difference data.

16. The method of claim 15, wherein the transmission medium comprises a power cable.

17. The method of claim 15 or 16, further comprising storing the calculated time difference data.

18. The method of claim 15, 16 or 17, further comprising repeating said calculating step a selected number of times without first performing said receiving step.
